# EUROPEAN PATENT APPLICATION

(11) **EP 4 575 911 A1**
(43) Date of publication of application: **25.06.2025**
(21) Application number: 24181729.5
(22) Date of filing: 12.06.2024
(51) Int. Cl.: G06N 3/09, G06N 3/096

(54) **TRAINING SAMPLE ACQUIRING METHOD AND APPARATUS AS WELL AS LARGE MODEL OPTIMIZATION TRAINING METHOD AND APPARATUS**

(30) Priority: 20.12.2023 CN 202311765328
(71) Applicant: Beijing Baidu Netcom Science and Technology Co., Ltd, Beijing 100085 (CN)
(72) Inventor: FENG, Zhifan, Beijing, 100085 (CN); WU, Hua, Beijing, 100085 (CN); SHE, Qiaoqiao, Beijing, 100085 (CN); WU, Tian, Beijing, 100085 (CN)
(74) Representative: Michalski Hüttermann & Partner Patentanwälte mbB

(57) **Abstract**

The present disclosure provides a training sample acquiring method and apparatus as well as a large model optimization training method and apparatus, and relates to the artificial intelligence fields, such as large models, deep learning, natural language processing, or the like. The training sample acquiring method may include: taking, as candidate queries, queries collected from a predetermined data source and capable of serving as input to a large model in response to determining that an optimization triggering condition is met; screening out target queries from the candidate queries, the target queries being queries which cannot be correctly processed by the large model; and constructing respectively corresponding training samples according to the target queries, the training samples being used for carrying out optimization training on the large model. The application of the solution of the present disclosure may improve an inference capability of the large model, or the like.

## Description

### TECHNICAL FIELD

The present disclosure relates to the field of artificial intelligence technologies, and particularly to a training sample acquiring method and apparatus as well as a large model optimization training method and apparatus in the fields of large models, deep learning, natural language processing, or the like.

### BACKGROUND

A large model is a deep learning model obtained by performing training using a large quantity of text data, and can generate a natural language text or understand meaning of the natural language text. Emergence of the large model may radically change a way of interaction between a human and a machine, thus remodeling an entire computing ecosystem.

### SUMMARY

The present disclosure provides a training sample acquiring method and apparatus as well as a large model optimization training method and apparatus.

A training sample acquiring method includes:
taking, as candidate queries, queries collected from a predetermined data source and capable of serving as input to a large model in response to determining that an optimization triggering condition is met;
screening out target queries from the candidate queries, the target queries being queries which cannot be correctly processed by the large model; and
constructing respectively corresponding training samples according to the target queries, the training samples being used for carrying out optimization training on the large model.

A large model optimization training method includes:
acquiring training samples, the training samples being corresponding training samples constructed according to target queries respectively, the target queries being queries which cannot be correctly processed by a large model and are screened out from candidate queries, and the candidate queries being queries collected from a predetermined data source and capable of serving as input to the large model; and
performing optimization training on the large model by using the training samples.

A training sample acquiring apparatus includes:
a query mining module configured to take, as candidate queries, queries collected from a predetermined data source and capable of serving as input to a large model in response to determining that an optimization triggering condition is met;
a problem finding module configured to screen out target queries from the candidate queries, the target queries being queries which cannot be correctly processed by the large model; and
a sample constructing module configured to construct respectively corresponding training samples according to the target queries, the training samples being used for carrying out optimization training on the large model.

A large model optimization training apparatus includes:
a sample acquiring module configured to acquire training samples, the training samples being corresponding training samples constructed according to target queries respectively, the target queries being queries which cannot be correctly processed by a large model and are screened out from candidate queries, and the candidate queries being queries collected from a predetermined data source and capable of serving as input to the large model; and
a model training module configured to perform optimization training on the large model by using the training samples.

An electronic device includes:
at least one processor; and
a memory connected with the at least one processor communicatively;
where the memory stores instructions executable by the at least one processor to enable the at least one processor to perform the method as mentioned above.

There is provided a non-transitory computer readable storage medium with computer instructions stored thereon, where the computer instructions are used for causing a computer to perform the method as mentioned above.

A computer program product includes a computer program/instruction, when executed by a processor, implements the method as mentioned above.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings,
Fig. 1 is a flow chart of a training sample acquiring method according to an embodiment of the present disclosure;
Fig. 2 is a flow chart of a large model optimization training method according to an embodiment of the present disclosure;
Fig. 3 is a schematic diagram of an overall implementation process of the large model optimization training method according to the present disclosure;
Fig. 4 is a schematic structural diagram of a training sample acquiring apparatus 400 according to an embodiment of the present disclosure;
Fig. 5 is a schematic structural diagram of a large model optimization training apparatus 500 according to an embodiment of the present disclosure; and
Fig. 6 shows a schematic block diagram of an electronic device 600 which may be configured to implement embodiments of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

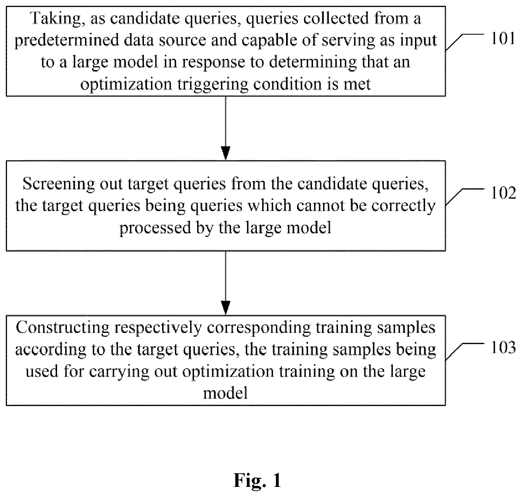

Fig. 1 is a flow chart of a training sample acquiring method according to an embodiment of the present disclosure. As shown in Fig. 1, the method includes the following implementation steps:
step 101: taking, as candidate queries, queries collected from a predetermined data source and capable of serving as input to a large model in response to determining that an optimization triggering condition is met;
step 102: screening out target queries from the candidate queries, the target queries being queries which cannot be correctly processed by the large model; and
step 103: constructing respectively corresponding training samples according to the target queries, the training samples being used for carrying out optimization training on the large model.

With the solution of the method embodiment, the candidate queries can be collected, the target queries which cannot be correctly processed by the large model can be mined from the candidate queries, and then, the corresponding training samples can be constructed in a targeted manner according to the target queries respectively, such that quality of the constructed training samples is improved, and then, when optimization training is subsequently performed on the large model using the constructed training samples, weak items in an inferential capability of the large model can be optimized in a targeted manner, thus improving an optimization effect, or the like.

The specific optimization triggering condition may be determined according to actual needs; for example, the method according to the embodiment shown in Fig. 1 may be periodically executed after a predetermined period of time, or a triggering instruction issued by a user is received.

In the step 101, when the optimization triggering condition is determined to be met, the queries collected from the predetermined data source and capable of serving as the input to the large model can be taken as the candidate queries. That is, the candidate queries can be obtained by query mining (or referred to as inference requirement mining, or the like). The specific predetermined data source(s) may be determined according to actual needs, and for example, may include a product log, a public evaluation set, an open data set, the Internet, or the like.

In the step 102, the target queries can be screened out from the obtained candidate queries, the target queries are the queries which cannot be correctly processed by the large model, and the large model is required to be subjected to optimization training using the method according to the present disclosure. In addition, the large model may be an original large model obtained by pre-training and supervised fine-tuning (SFT) training, or a large model obtained by performing one or more times of optimization training on the original large model.

Preferably, when the target queries are screened from the candidate queries, the following processing may be performed on each candidate query: taking the candidate query as the input to the large model to obtain a reply corresponding to the candidate query and generated by the large model, and taking the candidate query as the screened-out target query in response to determining that the reply is an error reply which is not matched with the candidate query.

That is, for each candidate query, the corresponding reply can be generated by the large model, and if the generated reply is determined to be the error reply, the candidate query can be determined to be the target query. That is to say, the capability of the large model can be utilized to assist effect evaluation to find the weak items of the current inferential capability, or the like.

Preferably, for each candidate query, the candidate query and the corresponding reply may be input into an evaluation model obtained by pre-training, so as to obtain an evaluation result indicating whether the reply is matched with the candidate query and output by the evaluation model.

For example, for candidate query a, after reply a corresponding to the candidate query a is generated by the large model, the candidate query a and the reply a may be input to the evaluation model, so as to obtain an evaluation result indicating whether the reply a is matched with the candidate query a and output by the evaluation model, and if no, the candidate query a may be taken as one screened-out target query.

The evaluation model can be obtained by performing training with a large number of training samples constructed in advance. Correspondingly, by means of the evaluation model, the evaluation result output by the evaluation model can be obtained quickly, and the evaluation model is obtained by performing training with a large number of training samples, thus guaranteeing accuracy, or the like, of the output evaluation result.

In practical application, an error set may be formed by the target queries; for example, assuming that a number of the candidate queries is 1,000, a number of the target queries may be 300.

Further, in the step 103, for each target query in the error set, the corresponding training sample may be constructed.

Preferably, for each target query, the following processing can be performed: determining a problem type corresponding to the target query, determining a sample type corresponding to the problem type, and constructing the training sample of the sample type according to the target query.

With the above processing, the corresponding training samples can be constructed in a targeted manner for different target queries respectively, thereby improving a subsequent model optimization training effect, or the like.

Preferably, the problem types may include a data coverage problem, a model capability problem and a data quality problem; correspondingly, for each target query, a way of determining the problem type corresponding to the target query may include: searching a training sample set, the training sample set including training samples (which can include training samples of each SFT training) used for carrying out SFT training on the large model; determining that the problem type corresponding to the target query is a data coverage problem in response to the fact that the training sample matched with the target query is not found; and determining that the problem type corresponding to the target query is a model capability problem or a data quality problem in an in-context learning (ICL) manner in response to finding the training sample matched with the target query.

For each target query, the training sample set may be first searched to determine whether there exists the training sample matched with the target query in the training sample set, the training sample matched with the target query may be a training sample identical to the target query or a training sample with similarity to the target query greater than a predetermined threshold, a specific value of the predetermined threshold may be determined according to actual needs, and if it is determined that there is no training sample matched with the target query in the training sample set, the problem type corresponding to the target query may be determined to be the data coverage problem, otherwise, whether the problem type corresponding to the target query is the model capability problem can be further determined in the ICL manner, and if the problem type is not the model capability problem, the problem type corresponding to the target query can be determined to be the data quality problem.

Preferably, the sample types include a first training sample type and a second training sample type, the first training sample type indicates the training samples for pre-training, and the second training sample type indicates the training samples for SFT training; correspondingly, for each target query, a way of determining the sample type corresponding to the problem type of the target query can include: in response to determining that the problem type is the model capability problem, determining that the sample type is the first training sample type, and in response to determining that the problem type is the data coverage problem or the data quality problem, determining that the sample type is the second training sample type.

That is, for the model capability problem, the first type of training samples may be constructed for pre-training the large model, and for the data quality problem or the data coverage problem, the second type of training samples may be constructed for SFT training of the large model.

With the above processing, multi-dimensional finding of the problems, such as the data coverage problem, the data quality problem, the model capability problem, or the like, can be realized, and the training samples of corresponding types can be constructed in a targeted manner for different types of problems respectively, thereby improving the subsequent model optimization training effect, or the like.

A way of constructing the training sample corresponding to each target query is not limited. For example, for each target query, as a possible implementation, the corresponding training sample may be constructed in the following manner: searching the reply corresponding to the target query from the Internet, acquiring a query similar to the target query from the Internet, acquiring the corresponding reply, and then constructing the training sample according to the acquired content.

According to the training sample constructed in the step 103, the large model can be subjected to optimization training.

Preferably, the large model can be pre-trained by using the first type of training samples to obtain a first model, and then, the first model can be subjected to SFT training by using the second type of training samples to obtain a second model, and the second model can be used for actual inference application; or the large model can be pre-trained by using the first type of training samples and subjected to SFT training by using the second type of training samples, and in response to the fact that the pre-training is not completed after the SFT training is completed to obtain a third model, the third model is used for actual inference application, and in response to completion of the pre-training, a first model is obtained, the first model is subjected to the SFT training by using the second type of training samples to obtain a second model, and the third model is replaced by the second model for actual inference application.

That is, the large model to be optimized may be first pre-trained using the first type of training samples, and after the pre-training is completed, the large model can be subjected to the SFT training using the second type of training samples, and then, the large model after the SFT training can be used for the actual inference application, but in the actual application, a pre-training time is usually long, and if the large model is used for the actual inference application after the pre-training and the SFT training are completed, the large model cannot be used for a long period of time, thereby affecting normal processing of business, or the like; in order to overcome the problem, the large model can be pre-trained using the first type of training samples and subjected to the SFT training using the second type of training samples, and since a time of the SFT training is relatively short, the large model after the SFT training can be first used for the actual inference application to avoid that normal processing of the business is affected for a long time, and then, after the pre-training is finished, the SFT training is performed on the pre-trained large model using the second type of training samples, such that the large model required by the current optimization training is obtained and replaces the large model after the SFT training for the actual inference application.

In practical application, when the large model is trained utilizing the first type of training samples or the second type of training samples, other training samples can be further combined; for example, taking pre-training as an example, current pre-training may be performed in conjunction with the training samples used during previous pre-training, so as to improve a training effect, or the like.

In addition, preferably, before the target queries are screened out from the candidate queries in the step 102, query types of the candidate queries may be determined; that is, requirement classification is performed, and correspondingly, after the target queries are screened out from the candidate queries, numbers of the target queries belonging to different query types may be counted, and then, processing capacities of the large model for different query types may be determined according to the counting result.

The specific query types may be determined according to actual needs. For example, the query types may include common sense inference, mathematical calculation, question answering, code generation, or the like.

A way of determining the query type of each candidate query is not limited, and for example, the query type may be determined by using a classification model obtained by pre-training. Correspondingly, by counting the numbers of the target queries belonging to different query types, the processing capabilities of the large model for different query types can be determined; that is, the query type(s) for which the large model has a poor processing capability may be determined, and the weak items, or the like, of the inference capability of the large model are found.

Preferably, after the optimization training is performed on the large model using the training samples in the step 103, the large model after the optimization training may also be tested by using test queries corresponding to different query types respectively, and processing capabilities of the large model after the optimization training for different query types may be determined according to the test results.

For example, the test queries may be used as input of the large model after the optimization training to obtain corresponding replies output by the large model, and then, the test queries and the corresponding replies may be input into the evaluation model to obtain evaluation results indicating whether the test queries are matched with the corresponding replies and output by the evaluation model, and further, the evaluation results may be used as the test results, and the processing capabilities of the large model after the optimization training for different query types may be determined in conjunction with the test results, such that aspects in which the large model after the optimization training is improved can be determined, and verification of an optimization training effect, or the like, is realized.

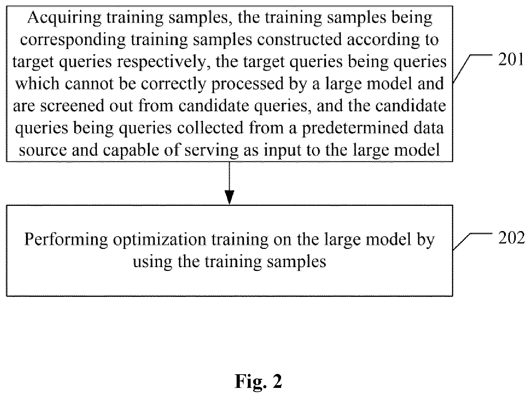

Fig. 2 is a flow chart of a large model optimization training method according to an embodiment of the present disclosure. As shown in Fig. 2, the method includes the following implementation steps:
step 201: acquiring training samples, the training samples being corresponding training samples constructed according to target queries respectively, the target queries being queries which cannot be correctly processed by a large model and are screened out from candidate queries, and the candidate queries being queries collected from a predetermined data source and capable of serving as input to the large model; and
step 202: performing optimization training on the large model by using the training samples.

The current large model still has certain deficiencies when processing inference tasks, and therefore, a way of improving the inference capability, especially the complex inference capability, of the large model is a problem to be solved urgently.

In the solution of the above method embodiment, a data-driven large model self-evolution mode is proposed, and the optimization training of the large model can be realized through operations, such as query mining, problem discovery, training sample construction, model training, or the like, such that the inference capability of the large model is improved, and correspondingly, accuracy of an inference result, or the like, can be improved by utilizing the large model to perform actual inference application.

The training samples acquired in the step 201 may be the training samples constructed using the method according to the embodiment shown in Fig. 1.

Preferably, the training samples may include a first type of training samples and a second type of training samples, and correspondingly, in the step 202, a way of performing the optimization training on the large model by using the training samples may include: pre-training the large model by using the first type of training samples to obtain a first model, performing SFT training on the first model by using the second type of training samples to obtain a second model, and performing actual inference application by the second model; or pre-training the large model by using the first type of training samples, performing SFT training on the large model by using the second type of training samples, and in response to the fact that the pre-training is not completed after the SFT training is completed to obtain a third model, performing actual inference application by the third model, and in response to completion of the pre-training, obtaining a first model, performing SFT training on the first model by using the second type of training samples to obtain a second model, and replacing the third model by the second model for actual inference application.

That is, the large model to be optimized may be first pre-trained using the first type of training samples, and after the pre-training is completed, the large model can be subjected to the SFT training using the second type of training samples, and then, the large model after the SFT training can be used for the actual inference application, but in the actual application, a pre-training time is usually long, and if the large model is used for the actual inference application after the pre-training and the SFT training are completed, the large model cannot be used for a long period of time, thereby affecting normal processing of business, or the like; in order to overcome the problem, the large model can be pre-trained using the first type of training samples and subjected to the SFT training using the second type of training samples, and since a time of the SFT training is relatively short, the large model after the SFT training can be first used for the actual inference application to avoid that normal processing of the business is affected for a long time, and then, after the pre-training is finished, the SFT training is performed on the pre-trained large model using the second type of training samples, such that the large model required by the current optimization training is obtained and replaces the large model after the SFT training for the actual inference application.

In addition, preferably, after the optimization training is performed on the large model using the training samples in the step 202, the large model after the optimization training may also be tested by using test queries corresponding to different query types respectively, and processing capabilities of the large model after the optimization training for different query types may be determined according to the test results.

For example, the test queries may be used as input of the large model after the optimization training to obtain corresponding replies output by the large model, and then, the test queries and the corresponding replies may be input into the evaluation model to obtain evaluation results indicating whether the test queries are matched with the corresponding replies and output by the evaluation model, and further, the evaluation results may be used as the test results, and the processing capabilities of the large model after the optimization training for different query types may be determined in conjunction with the test results, such that aspects in which the large model after the optimization training is improved can be determined, and verification of an optimization training effect, or the like, is realized.

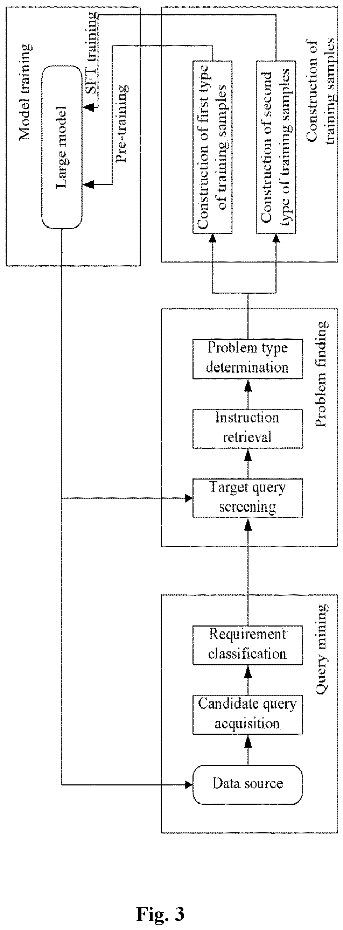

In combination with the above introduction, Fig. 3 is a schematic diagram of an overall implementation process of the large model optimization training method according to the present disclosure. As shown in Fig. 3, requirement classification means that the query types of the candidate queries are determined, instruction retrieval means that the training sample set is searched for each target query to determine the problem type of the target query, and in addition, the large model after the optimization training can be configured to generate new product logs in the data source, target query screening for next optimization training, or the like. For specific implementation of the steps shown in Fig. 3, reference can be made to the foregoing related descriptions, and details are not repeated.

In addition, it should be noted that the query in the solution of the present disclosure is usually in a text form, and the query may also be referred to as a question, i.e., a question in a text form input into the large model. In the solution of the present disclosure, the queries in the text form which can serve as input to the large model can be collected from the predetermined data source as the candidate queries; preferably, the candidate queries are required to include queries in different query types as far as possible, such as queries in query types of common sense inference, mathematical calculation, question answering, code generation, or the like, and then, the target queries which cannot be correctly processed by the large model can be screened out from the candidate queries in the text form, the corresponding training samples can be constructed according to the target queries in the text form respectively, and further, the large model can be subjected to the optimization training by using the constructed training samples, and correspondingly, the large model after the optimization training can give more accurate replies for the input queries in the text form.

For simplicity of description, all the above-mentioned embodiments of the method are described as combinations of a series of acts, but those skilled in the art should understand that the present disclosure is not limited by the described order of acts, as some steps may be performed in other orders or simultaneously according to the present disclosure. Further, those skilled in the art should also understand that the embodiments described in this specification are preferred embodiments and that acts and modules referred to are not necessary for the present disclosure. In addition, for parts that are not described in detail in a certain embodiment, reference may be made to the related descriptions of other embodiments.

The above is a description of an embodiment of the method, and an embodiment of an apparatus according to the present disclosure will be further described below.

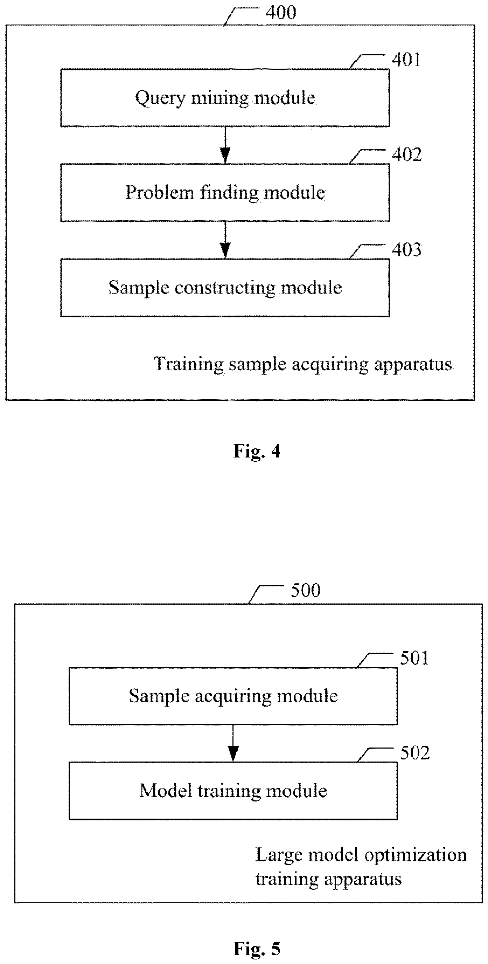

Fig. 4 is a schematic structural diagram of a training sample acquiring apparatus 400 according to an embodiment of the present disclosure. As shown in Fig. 4, the training sample acquiring apparatus includes:
a query mining module 401 configured to take, as candidate queries, queries collected from a predetermined data source and capable of serving as input to a large model in response to determining that an optimization triggering condition is met;
a problem finding module 402 configured to screen out target queries from the candidate queries, the target queries being queries which cannot be correctly processed by the large model; and
a sample constructing module 403 configured to construct respectively corresponding training samples according to the target queries, the training samples being used for carrying out optimization training on the large model.

With the solution of the apparatus embodiment, the candidate queries can be collected, the target queries which cannot be correctly processed by the large model can be mined from the candidate queries, and then, the corresponding training samples can be constructed in a targeted manner according to the target queries respectively, such that quality of the constructed training samples is improved, and then, when optimization training is subsequently performed on the large model using the constructed training samples, weak items in an inferential capability of the large model can be optimized in a targeted manner, thus improving an optimization effect, or the like.

When the optimization triggering condition is determined to be met, the query mining module 401 can take the queries collected from the predetermined data source and capable of serving as the input to the large model as the candidate queries. That is, the candidate queries can be obtained by query mining (or referred to as inference requirement mining, or the like).

The problem finding module 402 can screen out the target queries from the obtained candidate queries, the target queries being the queries which cannot be correctly processed by the large model.

Preferably, when screening out the target queries from the candidate queries, the problem finding module 402 may perform the following processing on each candidate query: taking the candidate query as the input to the large model to obtain a reply corresponding to the candidate query and generated by the large model, and taking the candidate query as the screened-out target query in response to determining that the reply is an error reply which is not matched with the candidate query.

Preferably, for each candidate query, the problem finding module 402 may input the candidate query and the corresponding reply into an evaluation model obtained by pre-training, so as to obtain an evaluation result indicating whether the reply is matched with the candidate query and output by the evaluation model.

Further, the sample constructing module 403 can construct the corresponding training sample for each target query.

Preferably, for each target query, the sample constructing module 403 can perform the following processing: determining a problem type corresponding to the target query, determining a sample type corresponding to the problem type, and constructing the training sample of the sample type according to the target query.

Preferably, the problem types may include a data coverage problem, a model capability problem and a data quality problem; correspondingly, for each target query, a way in which the sample constructing module 403 determines the problem type corresponding to the target query may include: searching a training sample set, the training sample set including training samples used for carrying out SFT training on the large model; determining that the problem type corresponding to the target query is a data coverage problem in response to the fact that the training sample matched with the target query is not found; and determining that the problem type corresponding to the target query is a model capability problem or a data quality problem in an ICL manner in response to finding the training sample matched with the target query.

Preferably, the sample types include a first training sample type and a second training sample type, the first training sample type indicates the training samples for pre-training, and the second training sample type indicates the training samples for SFT training; correspondingly, for each target query, a way in which the sample constructing module 403 determines the sample type corresponding to the problem type of the target query can include: in response to determining that the problem type is the model capability problem, determining that the sample type is the first training sample type, and in response to determining that the problem type is the data coverage problem or the data quality problem, determining that the sample type is the second training sample type.

That is, for the model capability problem, the first type of training samples may be constructed, and for the data quality problem or the data coverage problem, the second type of training samples may be constructed.

In addition, preferably, before the target queries are screened out from the candidate queries, the query mining module 401 can determine query types of the candidate queries, and correspondingly, after the target queries are screened out from the candidate queries, the problem finding module 402 can count numbers of the target queries belonging to different query types, and then determine processing capacities of the large model for different query types according to the counting result.

Fig. 5 is a schematic structural diagram of a large model optimization training apparatus 500 according to an embodiment of the present disclosure. As shown in Fig. 5, the large model optimization training apparatus includes:
a sample acquiring module 501 configured to acquire training samples, the training samples being corresponding training samples constructed according to target queries respectively, the target queries being queries which cannot be correctly processed by a large model and are screened out from candidate queries, and the candidate queries being queries collected from a predetermined data source and capable of serving as input to the large model; and
a model training module 502 configured to perform optimization training on the large model by using the training samples.

In the solution of the above apparatus embodiment, a data-driven large model self-evolution mode is proposed, and the optimization training of the large model can be realized through operations, such as query mining, problem discovery, training sample construction, model training, or the like, such that the inference capability of the large model is improved, and correspondingly, accuracy of an inference result, or the like, can be improved by utilizing the large model to perform actual inference application.

Preferably, the training samples include a first type of training samples and a second type of training samples, and correspondingly, the model training module 502 can: pre-train the large model by using the first type of training samples to obtain a first model, perform SFT training on the first model by using the second type of training samples to obtain a second model, and perform actual inference application by the second model; or pre-train the large model by using the first type of training samples, perform SFT training on the large model by using the second type of training samples, and in response to the fact that the pre-training is not completed after the SFT training is completed to obtain a third model, perform actual inference application by the third model, and in response to completion of the pre-training, obtain a first model, perform SFT training on the first model by using the second type of training samples to obtain a second model, and replace the third model by the second model for actual inference application.

In addition, preferably, after the optimization training is performed on the large model using the training samples, the model training module 502 can test the large model after the optimization training by using test queries corresponding to different query types respectively, and determine processing capabilities of the large model after the optimization training for different query types according to the test results.

For the specific work flow of the embodiments of the apparatuses shown in Figs. 4 and 5, reference may be made to the related description in the foregoing embodiment of the method, and details are not repeated.

In conclusion, by adopting the solution of the present disclosure, self evolution of the inference capability of the large model based on data driving and model closed loop iteration can be realized, thereby improving the inference capability of the large model, and then improving the accuracy of the inference result, or the like.

The solution of the present disclosure may be applied to the field of artificial intelligence, and particularly relates to the fields of large models, deep learning, natural language processing, or the like. Artificial intelligence is a subject of researching how to cause a computer to simulate certain thought processes and intelligent behaviors (for example, learning, inferring, thinking, planning, or the like) of a human, and includes both hardware-level technologies and software-level technologies. Generally, the hardware technologies of the artificial intelligence include technologies, such as a sensor, a dedicated artificial intelligence chip, cloud computing, distributed storage, big data processing, or the like; the software technologies of the artificial intelligence mainly include a computer vision technology, a voice recognition technology, a natural language processing technology, a machine learning/deep learning technology, a big data processing technology, a knowledge graph technology, or the like.

The queries, or the like, in the embodiments of the present disclosure are not specific to a specific user, and cannot reflect personal information of a specific user. In the technical solution of the present disclosure, the collection, storage, usage, processing, transmission, provision, disclosure, or the like, of involved user personal information are in compliance with relevant laws and regulations, and do not violate public order and good customs.

According to the embodiment of the present disclosure, there are also provided an electronic device, a readable storage medium and a computer program product.

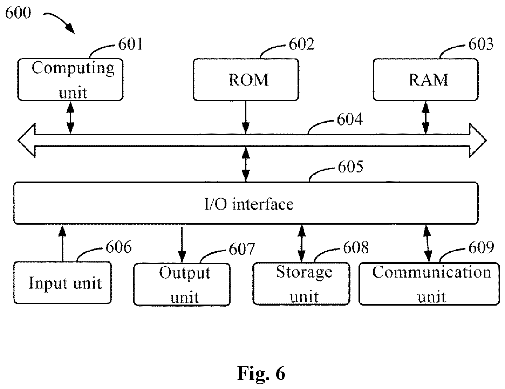

Fig. 6 shows a schematic block diagram of an electronic device 600 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 6, the device 600 includes a computing unit 601 which may perform various appropriate actions and processing operations according to a computer program stored in a read only memory (ROM) 602 or a computer program loaded from a storage unit 608 into a random access memory (RAM) 603. Various programs and data necessary for the operation of the device 600 may be also stored in the RAM 603. The computing unit 601, the ROM 602, and the RAM 603 are connected with one other through a bus 604. An input/output (I/O) interface 605 is also connected to the bus 604.

The plural components in the device 600 are connected to the I/O interface 605, and include: an input unit 606, such as a keyboard, a mouse, or the like; an output unit 607, such as various types of displays, speakers, or the like; the storage unit 608, such as a magnetic disk, an optical disk, or the like; and a communication unit 609, such as a network card, a modem, a wireless communication transceiver, or the like. The communication unit 609 allows the device 600 to exchange information/data with other devices through a computer network, such as the Internet, and/or various telecommunication networks.

The computing unit 601 may be a variety of general and/or special purpose processing components with processing and computing capabilities. Some examples of the computing unit 601 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 601 performs the methods and processing operations described above, such as the method according to the present disclosure. For example, in some embodiments, the method according to the present disclosure may be implemented as a computer software program tangibly contained in a machine readable medium, such as the storage unit 608. In some embodiments, part or all of the computer program may be loaded and/or installed into the device 600 via the ROM 602 and/or the communication unit 609. When the computer program is loaded into the RAM 603 and executed by the computing unit 601, one or more steps of the method according to the present disclosure may be performed. Alternatively, in other embodiments, the computing unit 601 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server or a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A large model optimization training method, **characterized by** comprising:
taking (101), as candidate queries, queries collected from a predetermined data source and capable of serving as input to a large model in response to determining that an optimization triggering condition is met;
screening (102) out target queries from the candidate queries, the target queries being queries which cannot be correctly processed by the large model; and
constructing (103) respectively corresponding training samples according to the target queries, the training samples being used for carrying out optimization training on the large model.

2. The method according to claim 1, wherein screening (102) out the target queries from the candidate queries comprises:
performing the following processing on each candidate query: taking the candidate query as the input to the large model to obtain a reply corresponding to the candidate query and generated by the large model, and taking the candidate query as the screened-out target query in response to determining that the reply is an error reply which is not matched with the candidate query.

3. The method according to claim 2, wherein determining that the reply is an error reply which is not matched with the candidate query comprises:
inputting the candidate query and the reply into an evaluation model obtained by pre-training to obtain an evaluation result indicating whether the reply is matched with the candidate query and output by the evaluation model.

4. The method according to claim 1 or 2 or 3, wherein constructing (103) respectively corresponding training samples according to the target queries comprises:
for each target query, performing the following processing: determining a problem type corresponding to the target query, determining a sample type corresponding to the problem type, and constructing the training sample of the sample type according to the target query.

5. The method according to claim 4, wherein the problem types comprise a data coverage problem, a model capability problem and a data quality problem;
wherein determining the problem type corresponding to the target query comprises:
searching a training sample set, the training sample set comprising training samples used for carrying out supervised fine-tuning training on the large model;
determining that the problem type corresponding to the target query is the data coverage problem in response to no training sample matched with the target query being found; and
determining that the problem type corresponding to the target query is the model capability problem or the data quality problem in an in-context learning manner in response to finding the training sample matched with the target query.

6. The method according to claim 5, wherein the sample types comprise a first training sample type and a second training sample type, wherein the first training sample type indicates the training samples for pre-training, and the second training sample type indicates the training samples for supervised fine-tuning training;
wherein determining the sample type corresponding to the problem type comprises: in response to determining that the problem type is the model capability problem, determining that the sample type is the first training sample type; and
in response to determining that the problem type is the data coverage problem or the data quality problem, determining that the sample type is the second training sample type.

7. The method according to claim 1, 2 or 3, further comprising:
before screening (102) out the target queries from the candidate queries, determining the query types of the candidate queries; and
after screening (102) out the target queries from the candidate queries, counting numbers of the target queries belonging to different query types, and determining processing capacities of the large model for different query types according to the counting result.

8. The method according to any one of claims 1 to 7, further comprising:
performing (202) optimization training on the large model by using the training samples.

9. The method according to claim 8, wherein the training samples comprise a first type of training samples and a second type of training samples;
wherein performing (202) optimization training on the large model by using the training samples comprises:
pre-training the large model by using the first type of training samples to obtain a first model, performing supervised fine-tuning training on the first model by using the second type of training samples to obtain a second model, and performing actual inference application by the second model; or pre-training the large model by using the first type of training samples, performing supervised fine-tuning training on the large model by using the second type of training samples, and in response to the fact that the pre-training is not completed after the supervised fine-tuning training is completed to obtain a third model, performing actual inference application by the third model, and in response to completion of the pre-training, obtaining a first model, performing supervised fine-tuning training on the first model by using the second type of training samples to obtain a second model, and replacing the third model by the second model for actual inference application.

10. The method according to claim 8 or 9, further comprising:
after performing (202) optimization training on the large model by using the training samples, testing the large model after the optimization training by using test queries corresponding to different query types respectively, and determining processing capabilities of the large model after the optimization training for different query types according to the test results.

11. A large model optimization training apparatus (400), **characterized by** comprising:
a query mining module (401) configured to take (101), as candidate queries, queries collected from a predetermined data source and capable of serving as input to a large model in response to determining that an optimization triggering condition is met;
a problem finding module (402) configured to screen (102) out target queries from the candidate queries, the target queries being queries which cannot be correctly processed by the large model; and
a sample constructing module (403) configured to construct (103) respectively corresponding training samples according to the target queries, the training samples being used for carrying out optimization training on the large model.

12. The apparatus according to claim 11, further comprising:
a model training module (502) configured to perform (202) optimization training on the large model by using the training samples.

13. An electronic device, comprising:
at least one processor; and
a memory connected with the at least one processor communicatively;
wherein the memory stores instructions executable by the at least one processor to enable the at least one processor to perform the method according to any one of claims 1 to 10.

14. A non-transitory computer readable storage medium storing computer instructions for causing a computer to perform the method according to any one of claims 1 to 10.

15. A computer program product comprising a computer program/instruction which, when executed by a processor, implements the method according to any one of claims 1 to 10.
